# EUROPEAN PATENT APPLICATION

(11) **EP 4 717 745 A1**
(43) Date of publication of application: **01.04.2026**
(21) Application number: 25189182.6
(22) Date of filing: 11.07.2025
(51) Int. Cl.: C09J 7/10, C09J 7/30, H01M 10/00

(54) **TAPE FOR BATTERY ATTACHMENT AND BATTERY ATTACHED WITH THE SAME**

(30) Priority: 30.09.2024 KR 20240132990
(71) Applicant: SAMSUNG SDI CO., LTD., Yongin-si, Gyeonggi-do 17084 (KR)
(72) Inventor: LIM, Sungil, 17084 Yongin-si (KR)
(74) Representative: Marks & Clerk LLP

(57) **Abstract**

A tape for battery attachment includes: an adhesive portion on one surface of the tape, the adhesive portion including: a weak adhesive portion; a strong adhesive portion having a stronger adhesive strength than that of the weak adhesive portion; and a perforation line perforated along an outer periphery of the strong adhesive portion.

## Description

### BACKGROUND

### 1. Field

Aspects of embodiments of the present disclosure relate to a tape for a battery attachment having a structure in which an ease of a battery disassembly may be improved, and a battery attached with the tape.

### 2. Description Of The Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

For some batteries, a pull tab tape may be provided to adhere to the battery cell for the user's convenience during a battery separation process. In a case where a strong adhesive surface is present on the adhesive surface of the tape, it may not be easy to separate from the battery cell, so it may be difficult to remove the pull tab tape. In addition, in a case where an area of a weak adhesive portion is increased without using a strong adhesive portion, a lifting between the pull tab tape and the cell may occur. Therefore, structural changes in the adhesive area may be desired.

The above information disclosed in this Background section is for enhancement of understanding of the background of the present disclosure, and therefore, it may contain information that does not constitute related (or prior) art.

### SUMMARY

Embodiments of the present disclosure may be directed to a tape for a battery attachment that may be prevented from being lifted off from the battery cell in a case where an electronic device is dropped, while also improving an ease of a battery disassembly, and a battery attached with the tape.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to one or more embodiments of the present disclosure, a tape for battery attachment includes: an adhesive portion on one surface of the tape, the adhesive portion including: a weak adhesive portion; a strong adhesive portion having a stronger adhesive strength than that of the weak adhesive portion; and a perforation line perforated along an outer periphery of the strong adhesive portion.

In an embodiment, the perforation line may include a plurality of perforation lines along the outer periphery, and adjacent perforation lines from among the plurality of perforation lines may be spaced from each other by a gap.

In an embodiment, the gap may be 0.4 mm wide.

In an embodiment, the strong adhesive portion may have a groove at a position corresponding to the gap between the adjacent perforation lines.

In an embodiment, the strong adhesive portion may include a plurality of strong adhesive portions, and the plurality of strong adhesive portions may be located symmetrically with each other with respect to a center of the adhesive portion.

In an embodiment, the tape for battery attachment may further include a gripping portion on a side of the adhesive portion. The strong adhesive portion may overlap with the gripping portion in a first direction, and may extend in a second direction orthogonal to the first direction.

In an embodiment, an extension length of the strong adhesive portion in the second direction may be greater than or equal to a width of the gripping portion in the second direction.

In an embodiment, the perforation line may be spaced from the strong adhesive portion by a distance.

In an embodiment, a section between the perforation line and the strong adhesive portion spaced from each other by the distance may include a non-adhesive area.

In an embodiment, a section between the perforation line and the strong adhesive portion spaced from each other by the distance may include a part of the weak adhesive portion.

In an embodiment, the perforation line and the outer periphery of the strong adhesive portion may contact each other.

In an embodiment, the tape for battery attachment may further include one or more non-adhesive portions, and the one or more non-adhesive portions may be located on an edge of the weak adhesive portion.

In an embodiment, the strong adhesive portion may at least partly overlap with a fixing tape configured to be adhered to another surface of the tape.

According to one or more embodiments of the present disclosure, a battery attached with a tape for battery attachment, includes: an adhesive portion on a surface of the tape, the adhesive portion including: a weak adhesive portion; a strong adhesive portion having a stronger adhesive strength than that of the weak adhesive portion; and a perforation line perforated along an outer periphery of the strong adhesive portion.

In an embodiment, the perforation line may include a plurality of perforation lines along the outer periphery, and adjacent perforation lines from among the plurality of perforation lines may be spaced from each other by a gap.

In an embodiment, the gap may be 0.4 mm wide.

In an embodiment, the strong adhesive portion may have a groove at a position corresponding to the gap between the adjacent perforation lines.

In an embodiment, the battery may further include a gripping portion on a side of the adhesive portion. The strong adhesive portion may overlap with the gripping portion in a first direction, and may extend in a second direction orthogonal to the first direction.

In an embodiment, an extension length of the strong adhesive portion in the second direction may be greater than or equal to a width of the gripping portion in the second direction.

In an embodiment, the strong adhesive portion may at least partly overlap with a fixing tape configured to be adhered to another surface of the tape.

At least some of the above and other features of the invention are set out in the claims.

According to some embodiments of the present disclosure, the adhesive portion of the battery attachment tape may be provided with a plurality of strong adhesive portions in which perforation lines are sequentially surrounded in a direction in which the tape is peeled, so that the user may more easily peel the battery attachment tape. For example, at least one non-adhesive portion may be provided, so that the battery attachment tape may be prevented or substantially prevented from being lifted or making a noise due to a dropping or a twisting of the electronic device, for example, due to carelessness during use, thereby partially separating from the battery cell.

According to some embodiments of the present disclosure, the battery attachment tape may be formed so that the peeling direction of the battery attachment tape and the extension direction of the strong adhesive portion are formed in a direction that is orthogonal, or at least formed at an angle close to orthogonal, so as to increase the convenience of peeling.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates an exploded perspective view of a battery including a battery attachment tape according to an embodiment of the present disclosure.
FIG. 2 illustrates an adhesive surface of a battery attachment tape according to an embodiment of the present disclosure.
FIG. 3 illustrates an adhesive surface of a battery attachment tape according to an embodiment of the present disclosure.
FIG. 4 illustrates a perspective view of a state in which a battery attachment tape is attached to a battery cell according to an embodiment of the present disclosure.
FIG. 5 illustrates a perforation line extending along a strong adhesive portion according to an embodiment of the present disclosure.
FIG. 6 illustrates an enlarged view of a space between a strong adhesive portion and a perforation line according to an embodiment of the present disclosure.
FIG. 7 illustrates an enlarged view of a strong adhesive portion and a perforation line without a separation space therebetween according to an embodiment of the present disclosure.
FIG. 8 illustrates an area in which a fixing tape and a strong adhesive portion overlap with each other according to an embodiment of the present disclosure.
FIG. 9 illustrates a width of a gripping portion and a width of a strong adhesive portion in a second direction according to an embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

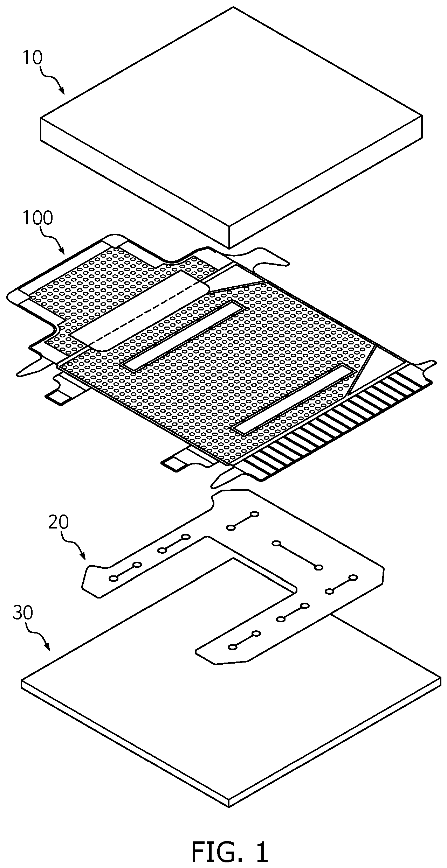

FIG. 1 illustrates an exploded perspective view of a battery including a battery attachment tape 100 (e.g., a tape for battery attachment) according to an embodiment of the present disclosure.

Referring to FIG. 1, a battery according to an embodiment of the present disclosure may include a battery cell 10, the battery attachment tape 100, a fixing tape 20, and a battery fixing portion 30. In an embodiment, the battery includes at least the battery cell 10 and the battery attachment tape 100, which may be stacked in the manner illustrated in FIG. 1. The battery attachment tape 100 may be directly adhered to and coupled to the battery cell 10. For example, one surface of the battery attachment tape 100 may be adhered to one surface of the battery cell 10, one surface of the fixing tape 20 may be attached to another surface (e.g., an opposite surface) of the battery attachment tape 100, and one surface of the battery fixing portion 30 may be attached to another surface (e.g., an opposite surface) of the fixing tape 20. The battery fixing portion 30 may be a case of an electronic device, or a structure disposed inside or outside the electronic device, such as a housing.

The battery attachment tape 100 includes an adhesive portion formed on one surface thereof, which may be the surface facing the battery cell 10. For example, a film-type battery attachment tape (100) may have an adhesive strength on one side thereof, and may have a surface without an adhesive strength opposite to the one side. Therefore, the battery attachment tape 100 may be adhered depending on the adhesive strength of the fixing tape 20 in a case of adhering to the fixing tape 20. For example, the fixing tape 20 may have a suitable adhesive strength (e.g., a predetermined adhesive strength) on both surfaces (e.g., on opposite surfaces) thereof, or in other words, on the surface facing the battery attachment tape 100 and on the surface facing the battery fixing portion 30.

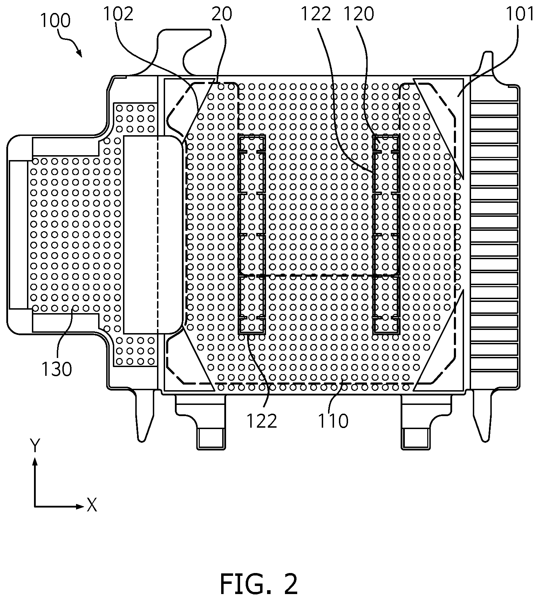

FIG. 2 illustrates an adhesive surface of a battery attachment tape 100 according to an embodiment of the present disclosure.

Referring to FIG. 2, the battery attachment tape 100 may include an adhesive portion on one side that includes an adhesive surface that adheres to the surface of the battery cell 10. The adhesive portion includes a weak adhesive portion 110, and a strong adhesive portion 120 having a stronger adhesive force (e.g. a stronger adhesive strength) than that of the weak adhesive portion 110. The adhesive portion may further include a perforation line 122 perforated along an outer periphery of the strong adhesive portion 120. For example, a gripping portion 130 may be included on a side of the adhesive portion.

In an embodiment, the weak adhesive portion 110 may occupy at least half of a total adhesive area formed in the adhesive portion. The weak adhesive portion 110 may include a plurality of dot-shaped adhesive areas having a suitable size (e.g., a predetermined size). As illustrated in FIG. 2, the dot shape may be circular, but the present disclosure is not limited thereto. For example, the dot shape may be formed by using a mask corresponding to the dot shape formed on the adhesive surface of the adhesive film.

The adhesive strength of the weak adhesive portion 110 is weaker than that of the strong adhesive portion 120. The adhesive strength may occur over the same area, and may be determined by an exposed area of an adhesive material or by a type of the adhesive material. For example, the adhesive strength of the weak adhesive portion 110 being formed to be weaker than that of the strong adhesive portion 120 may mean that the adhesive portion has a high adhesive strength per unit area in a case of being peeled.

In an embodiment, the strong adhesive portion 120 may occupy at least a portion of the other remaining area excluding the weak adhesive portion 110. A plurality of strong adhesive portions 120 may be provided in the battery attachment tape 100. The strong adhesive portions 120 may be disposed to be symmetrical or substantially symmetrical with each other with respect to a center of the adhesive portion. In the embodiment illustrated in FIG. 2, in a case where the two strong adhesive portions 120 are provided, they may be disposed inside (e.g., on or overlapping with) the weak adhesive portion 110 to be symmetrical or substantially symmetrical with each other with respect to the center of the adhesive portion.

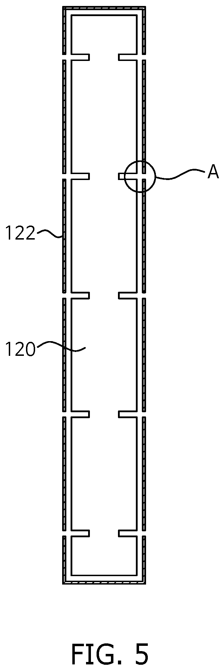

In an embodiment, the strong adhesive portion 120 may include the perforation line 122 formed on the periphery thereof, which may enable the thin film to be cut or broken in a case where the battery attachment tape 100 is peeled off from the battery cell 10. For example, in a case where the battery attachment tape 100 is peeled off, the strong adhesive portion 120 includes a plurality of perforation lines 122 arranged along the outer periphery thereof, so that a section where the perforation lines 122 are spaced apart from each other, or in other words, the section where the film is connected, may be cut or broken. Therefore, even after the battery is peeled off from the electronic device, the strong adhesive portion 120 may remain attached to the battery cell 10. For example, in order to ensure that the film is cut off along the perforation line 122 in a case where the battery attachment tape 100 is peeled off, a tensile strength of the film may be formed to be weaker than the adhesive strength of the strong adhesive portion 120, and may have a tensile strength more than the adhesive strength of the weak adhesive portion 110. The strong adhesive portion 120 and the perforation line 122 will be described in more detail below with reference to FIG. 5 to FIG. 7.

In an embodiment, the strong adhesive portion 120 overlaps with the gripping portion 130 disposed on the side of the adhesive portion in a first direction, and may extend in a second direction orthogonal to the first direction. As used herein, the first direction may be the X direction illustrated in FIG. 2, and the second direction may be the Y direction. For example, the width in the first direction may be relatively narrower, and the width in the second direction may be relatively longer. The strong adhesive portions 120 may be symmetrically or substantially symmetrically disposed with each other to minimize or reduce a separation of the battery due to a twisting or a dropping of the electronic device.

For example, because the twisting of the battery may occur in a diagonal direction, it may occur in a direction of connecting a corner of the adhesive portion and a corner positioned at an oblique line with respect to FIG. 2, as an axis. Accordingly, the strong adhesive portion 120 may be disposed in a symmetrical shape, and the axis along which twisting may occur may extend to a length that may cross the strong adhesive portion 120. As described above, the strong adhesive portion 120 may maintain or substantially maintain an adhesive state in response to an external force, and may transmit a more relaxed force to the surrounding weak adhesive portion 110, thereby minimizing or reducing a separation of the battery due to a twisting or a dropping of the electronic device.

In an embodiment, the adhesive portion may include at least one non-adhesive portion 101. For example, as shown in FIG. 2, at least one non-adhesive portion 101 may be provided along an edge of the adhesive portion. In the embodiment illustrated in FIG. 2, two non-adhesive portions 101 may be formed at the upper corners and two non-adhesive portions 101 may be formed at the lower corners, but the positions of the non-adhesive portions 101 are not limited thereto, and depending on the desired design, the non-adhesive portions 101 may be provided at one of or four of the four corners.

In more detail, as shown in FIG. 2, the adhesive portion may have a substantially quadrangular shape, and in a case where the corners where the non-adhesive portions 101 may be disposed, respectively, are referred to as the first to fourth corners, in an embodiment, they may be formed at the first to fourth corners, respectively. The first corner and the second corner may be disposed on the left and right sides, respectively, of the upper end portion of the adhesive portion as shown in FIG. 2. Additionally, the third corner and the fourth corner may be disposed on the left and right sides, respectively, of the lower end portion of the adhesive portion.

In an embodiment, the area of the non-adhesive portion 101 may be 5% to 20% of the total area of the adhesive portion. For example, the non-adhesive portion 101 may occupy about 13% of the total area of the adhesive portion. However, the present disclosure is not limited thereto, and as long as the adhesive portion may be attached to the battery cell 10, the non-adhesive portion may have various suitable widths. In an embodiment, the combined area of the weak adhesive portion 110 and the non-adhesive portion 101 may be formed to be wider than the area of the strong adhesive portion 120, so that the user may more easily remove the battery attachment tape 100 from the battery cell 10.

In an embodiment, the non-adhesive portion 101 may include a boundary line (c-cut) 102 that divides the adhesive area and the non-adhesive area from each other obliquely at least. For example, the shape of the non-adhesive portion 101 may be a triangle, or may be a polygon such as a trapezoid or a semicircle. The c-cut 102 may have a suitable structure capable of corresponding to a twisting that may occur around the X direction or the Y direction while the battery attaching tape 100 is attached to the battery cell 10 through the adhesive portion. For example, it may mean previously preventing noise occurring by partial separation of the adhesive portion in a case where the battery cell 10 is affected by twisting. In more detail, in a case where the adhesive state between the adhesive portions of the battery attachment tape 100 and battery cell 10 is released and the battery cells are reattached and separated due to the remaining adhesive force, a repetitive noise may occur, but the battery attachment tape 100 may minimize or reduce the occurrence of such noise by providing the non-adhesive portion 101 at at least one corner of the adhesive portion.

In an embodiment, the battery attachment tape 100 may include the gripping portion 130 extending in one direction from the adhesive portion. At least a portion of the gripping portion 130 may have adhesive properties. For example, at least a portion of the gripping portion 130 having adhesive properties on a hexahedral battery cell 10 may be attached to one or more surfaces of the battery cell 10. The bonding area between the gripping portion 130 and the battery cell 10 may be selected within a bonding strength range of the weak adhesive portion 110 and the strong adhesive portion 120.

In some embodiments, the fixing tape 20 may be adhered to the other surface of the battery attachment tape 100, or in other words, a surface where no adhesive portion is formed. At least a portion of the fixing tape 20 may overlap with the strong adhesive portion 120 of the battery attachment tape 100. In other words, the fixing tape 20 may be disposed in a form in which a partial area thereof overlaps with the strong adhesive portion 120, and the remaining area thereof does not overlap with the strong adhesive portion 120.

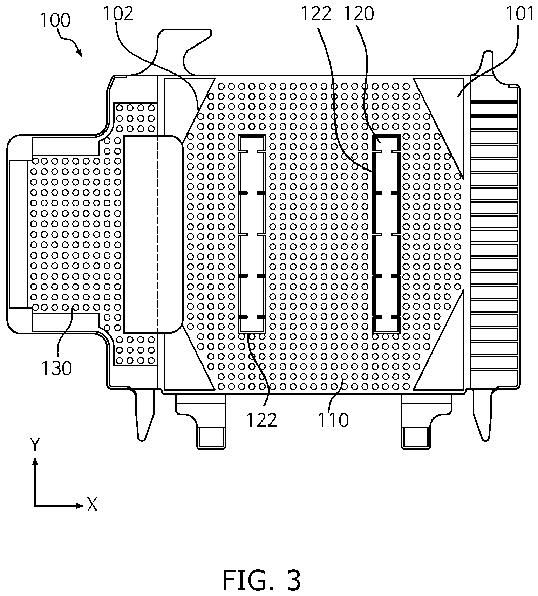

FIG. 3 illustrates an adhesive surface of a battery attachment tape 100 according to an embodiment of the present disclosure.

The battery attachment tape 100 illustrated in FIG. 3 may have the same or substantially the same configuration as that described above with reference to FIG. 2, except that the strong adhesive portion 120 may be formed without overlapping with the weak adhesive portion 110, and thus, redundant description thereof may not be repeated.

Referring to FIG. 3, according to an embodiment, the weak adhesive portion 110 may be formed in (e.g., only in) an area other than the area in which the strong adhesive portion 120 is formed. As described above, the weak adhesive portion 110 may be an adhesive area configured of a plurality of dots, and may be formed by using a mask corresponding to the dot shape that is formed on the adhesive surface of the adhesive film. On the other hand, the strong adhesive portion 120 may use the adhesive surface of the adhesive film as it is.

The strong adhesive portion 120 overlaps with the gripping portion 130 disposed on the side of the adhesive portion in the first direction, and may extend in the second direction orthogonal to the first direction. For example, the width in the first direction may be relatively narrower, and the width (or length) in the second direction may be relatively longer. In some embodiments, a vertical level of the upper surface (e.g., a thickness) of the strong adhesive portion 120 and a vertical level of the upper surface (e.g., a thickness) of the weak adhesive portion 110 may be the same or substantially the same as each other.

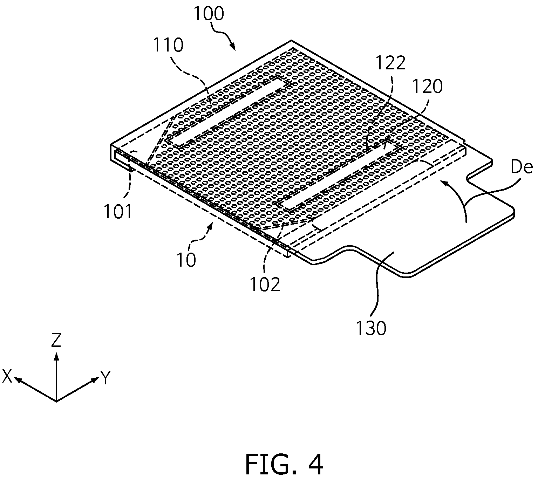

FIG. 4 illustrates a perspective view of a state in which a battery attaching tape 100 is attached to a battery cell 10 according to an embodiment of the present disclosure.

Referring to FIG. 4, the gripping portion 130 may be pulled in the first direction (e.g., the X direction) to be peeled off. However, even in a case where the film is not pulled completely parallel to the first direction, but is pulled in a direction De corresponding thereto and is peeled off, the film may be cut or broken by the perforation line 122, and the strong adhesive portion 120 may be separated from the adhesive portion (e.g., from the weak adhesive portion 110).

For example, in a case where the battery attachment tape 100 is peeled off, in addition to the forces in the first and second directions, a force in the third direction (e.g., the Z direction) is also applied, and the force pulling in the third direction causes the weak adhesive portion 110 to be separated from the battery cell 10, but the strong adhesive portion 120 is relatively strongly adhered to the battery cell 10 so that it may be separated from the adhesive portion along the perforation line 122 and remain in an adhered state with the battery cell 10. This is due to the strong adhesive strength of the adhesive portion as well as the structure designed to cut or break the film between the perforation lines 122 extending along the outer periphery of the strong adhesive portion 120.

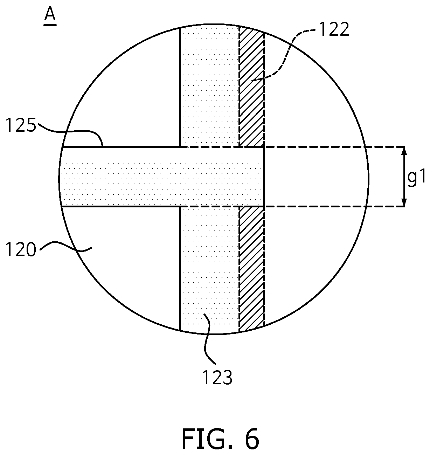

FIG. 5 illustrates a perforation line 122 extending along a strong adhesive portion 120 according to an embodiment of the present disclosure. FIG. 6 illustrates an enlarged view of a space between a strong adhesive portion 120 and a perforation line 122 according to an embodiment of the present disclosure.

Referring to FIG. 5 and FIG. 6, the strong adhesive portion 120 may have a rectangular shape extending in one direction, and the perforation line 122 extending along an outer periphery adjacent to the outer periphery of the strong adhesive portion 120 may be formed. The perforation line 122 may be in the form of a through hole penetrating the film, and may be in the form of a long hole extending in the extending direction. A plurality of perforation lines 122 may be provided. For example, adjacent perforation lines 122 on a path in which the perforation lines 122 are arranged may be spaced apart from each other by a gap (e.g., a predetermined gap) g1. For example, the gap g1 may be 0.4 mm. The film in the spaced section corresponding to the gap g1 may be a non-adhesive area or a weak adhesive portion that does not contain an adhesive material.

In an embodiment, the strong adhesive portion 120 may include a groove 125 formed at a position corresponding to the gap g1 between the adjacent perforation lines 122. In some embodiments, the strong adhesive portion 120 and the perforation line 122 may include a separation space 123 therebetween to be spaced apart from each other by a suitable distance (e.g., a predetermined distance). In some embodiments, the separation space 123 may further refer to a space on the adhesive film formed by the groove 125 of the strong adhesive portion 120. As an example, the separation space 123 may be a non-adhesive area in which no adhesive material exists. As another example, the separation space 123 may be formed as part of the weak adhesive portion 110.

In a case where the battery attachment tape 100 is peeled off, a section corresponding to a gap between the film of the separation space 123 and/or the adjacent perforation lines may be cut or broken, and the strong adhesive portion 120 may remain on the battery cell 10. As an example, the strong adhesive portion 120 may be cut or broken by the groove 125 formed in the strong adhesive portion 120, so that a portion (e.g., only a portion) of the strong adhesive portion 120 remains on the battery cell 10.

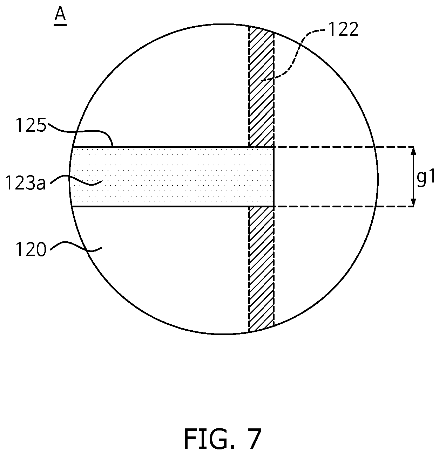

FIG. 7 illustrates an enlarged view of a strong adhesive portion 120 and a perforation line 122 without a separation space therebetween according to an embodiment of the present disclosure.

Referring to FIG. 7, other than a separation space 123a in the area corresponding to the groove 125 of the strong adhesive portion 120, no separation space may be provided between the perforation line 122 and the strong adhesive portion 120, so that the outer periphery of the perforation line 122 and the outer periphery of the strong adhesive portion 120 may be formed to be in contact with each other.

In this case, when the battery attachment tape is peeled off, the film between the perforation lines 122 may be cut, leaving only the strong adhesive portion 120 attached to the battery cell 10, and the battery attachment tape 100 may be removed as the weak adhesive portion 110 is peeled off. As an example, the strong adhesive portion 120 may be cut by the groove 125 formed in the strong adhesive portion 120, so that a portion (e.g., only a portion) of the strong adhesive portion 120 remains on the battery cell 10.

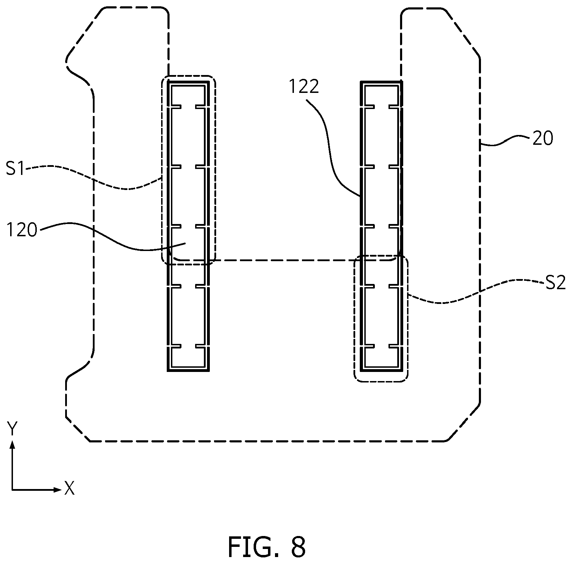

FIG. 8 illustrates an area in which the fixing tape 20 and the strong adhesive portion 120 overlap with each other according to an embodiment of the present disclosure.

Referring to FIG. 8, as described above with reference to FIG. 1, the battery attachment tape 100 and the battery fixing portion 30 may be adhered to each other by the adhesive force of the fixing tape 20. Because the adhesive surface of the battery attachment tape 100 may be formed on only one side (e.g., one surface) of the two sides (e.g., the two surfaces) of the battery attachment tape 100, the adhesive surface (e.g., the surface where the weak adhesive portion 110 and the strong adhesive portion 120 are formed) may be adhered to the battery cell 10 by coming into contact with the battery cell 10, and the other side (e.g., the other surface) thereof may be adhered to the fixing tape 20 by coming into contact with the fixing tape 20.

In this case, the fixing tape 20 may not have a square shape, and may have various suitable shapes depending on the desired design. As an example, the fixing tape 20 may have the same or substantially the same shape as the shape (e.g., a U shape) illustrated in FIG. 8. However, the present disclosure is not limited thereto, and the fixing tape 20 may have various suitable shape as needed or desired. In the present example, the fixing tape 20 may partially overlap with the weak adhesive portion 110, and may partially overlap with the strong adhesive portion 120. For example, in a pair of strong adhesive portions 120 arranged along the first direction, a portion of the strong adhesive portions 120 may form an overlapping area S2 that overlaps with the fixing tape 20, and a remaining portion thereof may form a nonoverlapping area S1 that does not overlap with the fixing tape 20. For example, even in the case of overlapping, the fixing tape 20 may be adhered to the non-adhesive surface of the battery attachment tape 100, so that a direct adhesion with the strong adhesive portion 120 may not occur, and the fixing tape 20 may come into contact with the film.

The adhesive strength of the fixing tape 20 may be weaker than that of the strong adhesive portion 120. In a case where the battery attachment tape 100 is peeled off from the battery cell 10, the fixing tape may also be removed during the peeling process. The fixing tape 20 may be attached to the battery fixing portion 30 side, and may be removed together in a case where the battery fixing portion 30 is removed. The fixing tape 20 may be formed so that the adhesive strength formed in the area where the fixing tape 20 and the strong adhesive portion 120 overlap with each other is not stronger than that of the strong adhesive portion 120. Because the adhesive material of the fixing tape 20 and the adhesive material of the strong adhesive portion 120 are adhered to both sides of the film with the film as a boundary, in order for the strong adhesive portion 120 to remain attached to the battery cell 10 after peeling of the battery attachment tape 100, it may be desirable for the adhesive material that is directly or indirectly attached to the strong adhesive portion 120 to have a weaker adhesive strength than that of the strong adhesive portion 120. In other words, the adhesive strength of the area corresponding to at least the overlapping area S2 in the fixing tape 20 may be formed to be lower than that of the strong adhesive portion 120.

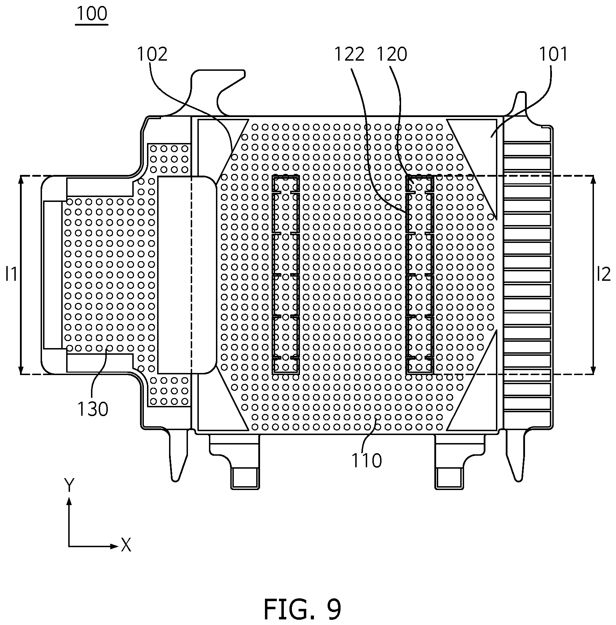

FIG. 9 illustrates a width l1 of the gripping portion 130 and a width l2 of the strong adhesive portion 120 in the second direction (e.g., the Y direction) according to an embodiment of the present disclosure.

Referring to FIG. 9, in an embodiment, the width I2 (e.g., the extension length) of the strong adhesive portion 120 in the second direction may be greater than or equal to the width l1 of the gripping portion 130 in the second direction. The tensile strength of the film may be closer to the adhesive strength of the weak adhesive portion 110 than the adhesive strength of the strong adhesive portion 120. For example, the tensile strength of the film may be formed to be the same or substantially the same level as that of the adhesive strength of the weak adhesive portion 110.

In some embodiments, the strong adhesive portion 120 extending in the second direction (e.g., the Y direction) may extend by as much as the twist axis may cross in the diagonal direction. However, this disposition may be satisfied not only by the length extending in the second direction, but also by the position in the first direction. For example, it may be disposed toward the center so that the diagonal direction crosses it.

In order to satisfy all of the above-described conditions, a pair of strong adhesive portions 120 may be provided at 1/3 of the adhesive portion and 2/3 of the adhesive portion from the left end portion in the first direction, respectively, and each strong adhesive portion 120 may extend to a length equivalent to 90% of the width of the adhesive portion based on the second direction. However, the position and size of the strong adhesive portion 120 may be variously modified as needed or desired, and the present disclosure is not limited thereto.

Although the present disclosure has been described above with respect to embodiments thereof, the present disclosure is not limited thereto. Various modifications and variations can be made thereto by those skilled in the art within the present disclosure and the equivalent scope of the appended claims.

## Claims

1. A tape (100) for battery attachment comprising:
an adhesive portion on one surface of the tape (100), the adhesive portion comprising:
a weak adhesive portion (110);
a strong adhesive portion (120) having a stronger adhesive strength than that of the weak adhesive portion (110); and
a perforation line (122) perforated along an outer periphery of the strong adhesive portion (120).

2. The tape (100) for battery attachment as claimed in claim 1, wherein the perforation line (122) comprises a plurality of perforation lines (122) along the outer periphery, and adjacent perforation lines (122) from among the plurality of perforation lines (122) are spaced from each other by a gap.

3. The tape (100) for battery attachment as claimed in claim 2, wherein the gap is 0.4 mm wide.

4. The tape (100) for battery attachment as claimed in claim 2 or claim 3, wherein the strong adhesive portion (120) has a groove (125) at a position corresponding to the gap between the adjacent perforation lines (122).

5. The tape (100) for battery attachment as claimed in any one of claims 1 to 4, wherein the strong adhesive portion (120) comprises a plurality of strong adhesive portions (120), and
the plurality of strong adhesive portions (120) are located symmetrically with each other with respect to a center of the adhesive portion.

6. The tape (100) for battery attachment as claimed in any one of claims 1 to 5, further comprising a gripping portion (130) on a side of the adhesive portion,
wherein the strong adhesive portion (120) overlaps with the gripping portion (130) in a first direction (X), and extends in a second direction (Y) orthogonal to the first direction (X).

7. The tape (100) for battery attachment as claimed in claim 6, wherein an extension length of the strong adhesive portion (120) in the second direction (Y) is greater than or equal to a width of the gripping portion (130) in the second direction (Y).

8. The tape (100) for battery attachment as claimed in any one of claims 1 to 7, wherein the perforation line (122) is spaced from the strong adhesive portion (120) by a distance.

9. The tape (100) for battery attachment as claimed in claim 8, wherein a section between the perforation line (122) and the strong adhesive portion (120) spaced from each other by the distance comprises a non-adhesive area.

10. The tape (100) for battery attachment as claimed in claim 8, wherein a section between the perforation line (122) and the strong adhesive portion (120) spaced from each other by the distance comprises a part of the weak adhesive portion (110).

11. The tape (100) for battery attachment as claimed in any one of claims 1 to 8, wherein the perforation line (122) and the outer periphery of the strong adhesive portion (120) contact each other.

12. The tape (100) for battery attachment as claimed in any one of claims 1 to 11, further comprising one or more non-adhesive portions (101),
wherein the one or more non-adhesive portions (101) are located on an edge of the weak adhesive portion (110).

13. The tape (100) for battery attachment as claimed in any one of claims 1 to 12, wherein the strong adhesive portion (120) at least partly overlaps with a fixing tape (20) configured to be adhered to another surface of the tape (100).

14. A battery (10) attached with a tape (100) according to claim 1.

15. The battery (10) as claimed in claim 14, wherein the perforation line (122) comprises a plurality of perforation lines (122) along the outer periphery, and adjacent perforation lines (122) from among the plurality of perforation lines (122) are spaced from each other by a gap.
